(19) Europäisches Patentamt
European Patent Office
Office européen des brevets

(11) **EP 4 214 482 B1**

(12) **FASCICULE DE BREVET EUROPEEN**

(45) Date de publication et mention de la délivrance du brevet:
**26.06.2024 Bulletin 2024/26**

(21) Numéro de dépôt: **21770015.2**

(22) Date de dépôt: **02.09.2021**

(51) Classification Internationale des Brevets (IPC):
*G01J 3/45* *(2006.01)*     *G01J 9/02* *(2006.01)*
*G01N 21/03* *(2006.01)*     *G01N 21/00* *(2006.01)*

(52) Classification Coopérative des Brevets (CPC):
**G01N 21/636;** G01N 23/2273

(86) Numéro de dépôt international:
**PCT/EP2021/074204**

(87) Numéro de publication internationale:
**WO 2022/058173 (24.03.2022 Gazette 2022/12)**

(54) **PROCEDE ET APPAREIL DE CONTROLE DU RETARD ENTRE DEUX IMPULSIONS LUMINEUSES**

VERFAHREN UND VORRICHTUNG ZUR STEUERUNG DER VERZÖGERUNG ZWISCHEN ZWEI LICHTIMPULSEN

METHOD AND APPARATUS FOR CONTROLLING THE DELAY BETWEEN TWO LIGHT PULSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2020 FR 2009466**

(43) Date de publication de la demande:
**26.07.2023 Bulletin 2023/30**

(73) Titulaire: **Commissariat à l'Energie Atomique et aux Energies Alternatives**
**75015 Paris (FR)**

(72) Inventeurs:
• **LUTTMANN, Martin**
  **91191 GIF SUR YVETTE (FR)**
• **BRESTEAU, David**
  **91191 GIF SUR YVETTE (FR)**
• **RUCHON, Thierry**
  **91191 GIF SUR YVETTE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
• **VAUGHAN JOHN ET AL: "Design of an optically-locked interferometer for attosecond pump-probe setups", OPTICS EXPRESS , vol. 27, no. 21 14 octobre 2019 (2019-10-14), page 30989, XP055810659, DOI: 10.1364/OE.27.030989 Extrait de l'Internet: URL:https://www.osapublishing.org/DirectPD FAccess/6CFA355D-FDBD-0F95-BFD8CF514F1 E9F9 C_422227/oe-27-21-30989.pdf?da=1&id=422227 &seq=0&mobile=no cité dans la demande**
• **MAROJU PRAVEEN KUMAR ET AL: "Attosecond pulse shaping using a seeded free-electron laser", NATURE, MACMILLAN JOURNALS LTD., ETC, LONDON, vol. 578, no. 7795, 1 février 2020 (2020-02-01), pages 386-391, XP037035987, ISSN: 0028-0836, DOI: 10.1038/S41586-020-2005-6 [extrait le 2020-02-10] cité dans la demande**
• **GUENOT D ET AL: "Measurements of relative photoemission time delays in noble gas atoms", JOURNAL OF PHYSICS B, ATOMIC MOLECULAR AND OPTICAL PHYSICS, INSTITUTE OF PHYSICS PUBLISHING, BRISTOL, GB, vol. 47, no. 24, 3 décembre 2014 (2014-12-03), page 245602, XP020275529, ISSN: 0953-4075, DOI: 10.1088/0953-4075/47/24/245602 [extrait le 2014-12-03]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

• LUCARELLI GIACINTO D ET AL: "Novel beamline for attosecond transient reflection spectroscopy in a sequential two-foci geometry", REVIEW OF SCIENTIFIC INSTRUMENTS, AIP, MELVILLE, NY, US, vol. 91, no. 5, 21 mai 2020 (2020-05-21), XP012247273, ISSN: 0034-6748, DOI: 10.1063/5.0005932 [extrait le 2020-05-21]

**Description**

L'invention relève de l'instrumentation pour l'étude des phénomènes ultrarapides, à l'échelle des femtosecondes ou des attosecondes. Elle porte sur un procédé et un appareil pour mesurer le retard entre deux impulsions lumineuses issues d'un interféromètre - une impulsion « de pompe » susceptible d'ioniser une cible et une impulsion « de sonde » pour réaliser un habillage (« dressing » en anglais) du processus d'ionisation - et sur l'utilisation de cette mesure pour stabiliser activement un interféromètre.

Pour mémoire, 1 femtoseconde (fs) est égale à $10^{-15}$ s et 1 attoseconde (as) est égale à $10^{-18}$s. Par « échelle des femtosecondes » on entend une durée inférieure à 1 picoseconde (1ps=$10^{-12}$ s) et plus particulièrement à 100 fs ; par « échelle des attosecondes » on entend une durée inférieure à 1 fs et plus particulièrement à 100 as.

On entend par « impulsion lumineuse » une impulsion électromagnétique infrarouge, visible ou ultraviolette, jusqu'aux domaines de l'ultraviolet extrême (UVX - longueur d'onde comprise entre 10 et 124 nm) et au-delà (rayons X mous).

Une « impulsion attoseconde » est une impulsion lumineuse dont la durée à mi-hauteur est inférieure à 1 fs. Les impulsions attosecondes sont typiquement constituées de rayonnement dans le domaine spectral dans l'ultraviolet extrême.

Un « train d'impulsions attosecondes » est constitué d'une succession d'impulsions attosecondes ; ces impulsions sont typiquement séparées d'intervalles, généralement constants, dont la durée est à l'échelle des femtosecondes ou des attosecondes. La durée du train est généralement elle-même à l'échelle des femtosecondes. Une impulsion attosecondes est considérée « isolée » lorsqu'elle n'est pas entourée d'impulsions satellites dans un intervalle temporel d'au moins plusieurs picosecondes (et typiquement de plusieurs microsecondes), ou si de telles impulsions satellites présentent une énergie inférieure d'au moins un facteur 10 à celle de l'impulsion considérée. Les trains d'impulsions présentent un spectre formé de pics distincts, avec parfois un fond continu, tandis que les impulsions isolées présentent un spectre continu.

Les impulsions attosecondes - isolées ou formant des trains - sont généralement obtenues grâce au phénomène connu comme « génération d'harmoniques d'ordre élevé » (GHOE, ou HHG de l'anglais « high-order harmonie génération »), qui peut être expliqué simplement de la manière suivante.

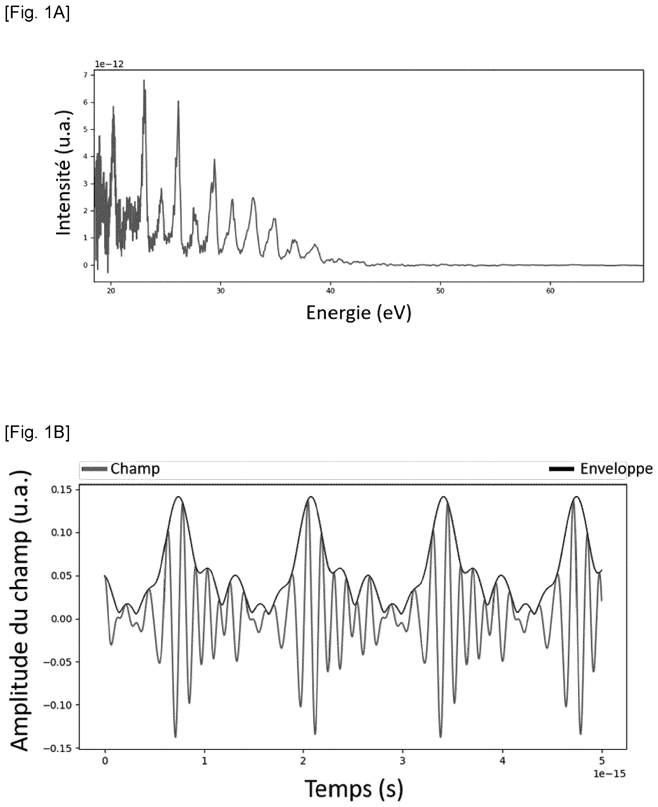

Lorsqu'une impulsion lumineuse (laser) femtosecondes, typiquement dans le domaine spectral du proche infrarouge ou du visible, est focalisée dans une cible (par exemple un jet de gaz noble) jusqu'à une intensité de l'ordre de $10^{14}$ - $10^{15}$ W/cm$^2$, le champ électrique du laser est suffisamment intense pour arracher des électrons de la cible par effet tunnel ou suppression de la barrière coulombienne. Les électrons arrachés sont accélérés par le champ laser, puis ramenés vers la cible, et peuvent se recombiner avec cette dernière avec émission d'un photon. Dans le domaine temporel, cela se manifeste sous la forme d'un train d'impulsions attosecondes - généralement deux pour chaque période optique de l'impulsion laser génératrice. Dans le domaine spectral, cela correspond à des pics à des fréquences qui sont des multiples (harmoniques) impairs de la fréquence de l'impulsion laser génératrice (« fondamentale »). Ces pics présentent un « plateau » d'intensité relativement constante jusqu'à une coupure à partir de laquelle l'intensité décroît rapidement. L'ordre d'harmonique correspondant à la coupure est proportionnel à l'intensité de l'impulsion laser et peut atteindre une valeur de plusieurs dizaines, d'où le nom du phénomène. Les impulsions attosecondes, qui se trouvent dans le domaine UVX sont séparées de la fondamentale et des harmoniques d'ordre le plus bas par un filtre, par exemple métallique. La [Fig. 1A] représente un spectre d'harmoniques d'ordre élevé obtenu en utilisant une fondamentale à 800 nm (1,55 eV) ; les harmoniques d'ordre 13 à 25 sont visibles. La [Fig. 1B] représente un train d'impulsions attosecondes obtenu en combinant les harmoniques 13 à 21 du spectre de la [Fig. 1A] ; la ligne grise représente le champ électrique oscillant à une fréquence dans le domaine de l'ultraviolet extrême, tandis que la ligne noire représente l'enveloppe des impulsions.

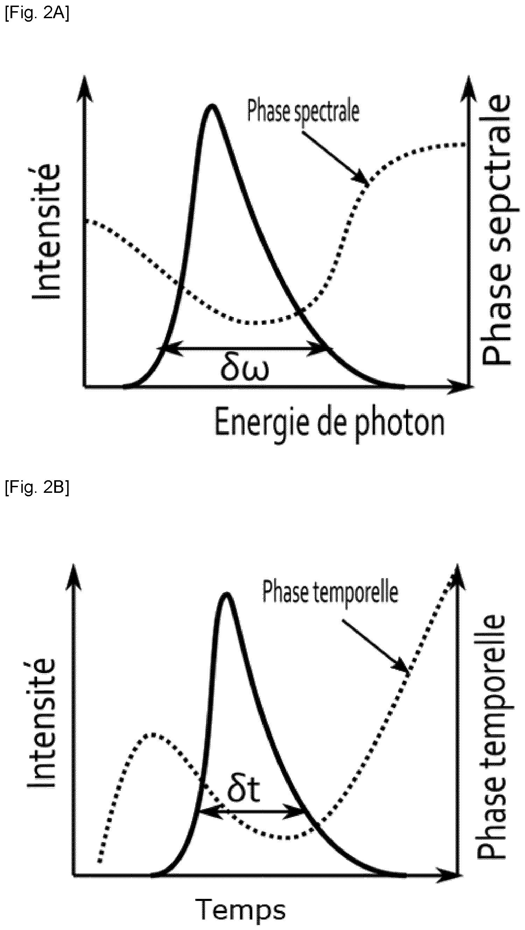

Plusieurs techniques ont été développées pour générer des impulsions attosecondes isolées, comme l'utilisation d'impulsions laser comprenant peu de cycles optiques ou modulées en polarisation, et/ou le filtrage d'un spectre HHG pour en isoler la région de coupure. Les figures [Fig. 2A] et [Fig. 2B] représentant schématiquement l'enveloppe d'une impulsion attoseconde isolée et le spectre UVX continu correspondant ; sur les deux figures, une ligne pointillée représente la phase temporelle ([Fig. 2A]) et la phase spectrale ([Fig. 2B]), respectivement. Sur la [fig. 2A], $\delta\omega$ désigne la largeur du spectre et sur la [Fig. 2B] $\delta t$ désigne la durée de l'impulsion ; d'une manière connue, $\delta\omega$ et $\delta t$ sont liée par la transformée de Fourier, la maîtrise de la phase spectrale permettant de minimiser la durée $\delta t$ pour une largeur spectrale $\delta\omega$ donnée. Bien que dans un tel spectre UVX continu l'on ne puisse plus identifier de pics distincts correspondant à des harmoniques impaires de la fondamentale, on continue à parler de génération d'harmoniques d'ordre élevé.

Plus d'informations sur la génération d'harmoniques d'ordre élevé et d'impulsions attosecondes peuvent être trouvées dans (Calegari 2016).

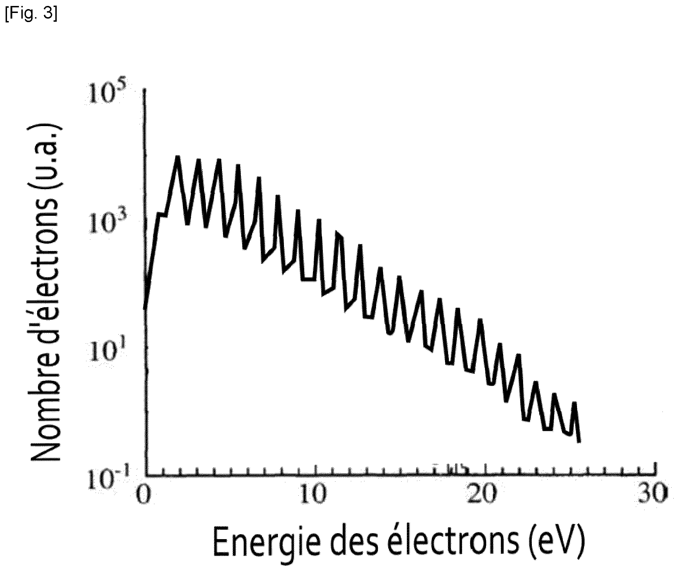

En plus de générer des harmoniques d'ordre élevé (et/ou un spectre UVX continu), la focalisation sur une cible d'une impulsion laser intense conduit à l'émission de photoélectrons dont le spectre est constitué de pics discrets (avec parfois un fond continu) dont les énergies sont des multiples entiers - pairs et impairs - de l'énergie d'un photon de l'impulsion laser. L'on parle alors d'ionisation « au-dessus du seuil » (ATI, de l'anglais « above-threshold ionization ») car on peut considérer que les électrons ont absorbé un nombre de photons supérieur à celui nécessaire pour atteindre l'énergie d'ionisation. La figure [Fig. 3] représente schématiquement un spectre ATI. Plus d'informations sur l'ionisation au-dessus du seuil peuvent être trouvées dans (Becker 2018).

Les impulsions attosecondes sont utilisées pour étudier des phénomènes physiques se déroulant sur des échelles de temps extrêmement courtes, à l'échelle des femtosecondes ou des attosecondes (on parle d'« attoscience » ou « attophysique »). Ces phénomènes concernent par exemple la dynamique des électrons dans la matière - dans le modèle semi-classique de Bohr, la période de l'électron de l'atome d'hydrogène est de 150 as. De manière analogue, les impulsions lasers femtosecondes sont utilisées depuis les années 1980 pour étudier le réarrangement des atomes au cours des réactions chimiques (« femtochimie »).

Comme dans le cas de la femtochimie, les expériences en attoscience se basent le plus souvent sur un schéma pompe-sonde, où une première impulsion lumineuse (« pompe ») déclenche un phénomène dans une cible et une seconde impulsion lumineuse (« sonde »), qui arrive sur la cible avec un retard variable par rapport à la première, sert à l'analyser. En attoscience, l'impulsion de pompe est souvent une impulsion attosecondes isolée ou un train d'impulsions attosecondes, tandis que l'impulsion de sonde est située dans le domaine proche infrarouge, visible ou proche ultraviolet, présente une durée à l'échelle des femtosecondes et peut être beaucoup plus intense que l'impulsion de pompe.

Les impulsions de pompe et de sonde sont généralement issues d'un même faisceau laser par l'intermédiaire d'un montage de type interféromètre. Plus précisément, l'interféromètre génère deux impulsions femtosecondes séparées spatialement et présentant un décalage temporel (retard), l'une de ces deux impulsions étant utilisée pour générer une ou des impulsions attosecondes. Une stabilisation active de l'interféromètre est nécessaire pour assurer un contrôle à du retard à l'échelle des attosecondes.

En conclusion, les expériences d'attoscience nécessitent de pouvoir mesurer très précisément le retard entre deux impulsions lumineuses de durée à l'échelle femto- ou attoseconde, et utiliser de telles mesures pour stabiliser un interféromètre. Ces impulsions peuvent avoir leurs fréquences dans des gammes très différentes l'une de l'autre, du visible à l'UVX. Il convient de noter que les techniques interférométriques classiques ne sont pas adaptées à la mesure du retard entre deux impulsions de fréquences différentes, ce qui nécessite l'utilisation de faisceaux additionnels.

D'une manière générale, pour stabiliser de manière active un interféromètre, on cherche à générer un ou plusieurs signaux d'erreur fonctions du retard $\tau$ entre les deux bras de l'interféromètre. Par exemple on peut considérer un signal d'erreur M donné par :

## Equation (1)

$$M(\phi) = O + A\sin(\phi)$$

Avec $\phi = \omega_M \tau$
$\omega_M$ étant une pulsation de modulation, et O et A des paramètres.

Pour déterminer les valeurs de O et A, un balayage du retard $\tau$ est effectué, puis une sinusoïde est ajustée aux valeurs mesurées de M. On peut ensuite asservir le retard $\tau$ à une valeur fixée, par exemple en maintenant le sinus dans l'expression de M égal à 0.

Pour pouvoir asservir l'interféromètre à une valeur quelconque du retard avec une bonne précision, il est cependant nécessaire de disposer de plus d'informations, c'est à dire d'un plus grand nombre de signaux modulés. On peut par exemple en utiliser deux présentant une phase différente (idéalement en quadrature de phase), voir (Krishnamachari 2006) :

## Equation (2)

$$M_1(t) = O_1 + A_1\sin(\phi(t) + \Delta)$$
$$M_2(t) = O_2 + A_2\cos\phi(t)$$

La phase $\phi$ est obtenue à partir des mesures de $M_1$ et $M_2$ de la manière suivante :

Equation (3)

$$\phi(t) = \mathscr{U}\left(\tan^{-1}\left(\frac{1}{\cos\Delta}\frac{A_2(M_1(t)-O_1)}{A_1(M_2(t)-O_2)} - \tan\Delta\right)\right)$$

Où $\mathscr{U}$ est un opérateur de dépliement (« unwrapping ») de phase permettant de tenir compte des sauts de phase, qui fonctionne pourvu que la phase $\phi$ ne change pas de plus de $\pi$ (en valeur absolue) entre deux mesures successives. Les incertitudes sur les valeurs mesurées de $M_1$ et $M_2$ engendrent une incertitude sur $\phi$ qui est indépendante de la phase et minimale (en moyenne sur $\phi$) pour $\Delta=0$, c'est-à-dire lorsque $M_1$ et $M_2$ sont en quadrature de phase.

La valeur de $\phi$ à laquelle on désire s'asservir peut être modifiée à tout instant, ce qui permet d'effectuer des balayages de retard en boucle fermée, particulièrement utiles lors d'expériences de type pompe-sonde. Il est également possible d'utiliser trois signaux, ou plus pour reconstruire $\phi$, par exemple par optimisation quadratique de la distance entre l'ensemble de ces signaux mesurés et des formes étalonnées préalablement par un balayage de $\tau$.

Plusieurs techniques connues permettent de générer de tels signaux modulés. Leur application à la stabilisation active d'interféromètres attoseconde basés sur la génération d'harmonique d'ordre élevé se révèle difficile. En effet, étant donné que l'intense faisceau de génération, généralement dans l'infrarouge (IR) proche, doit être filtré après la GHOE (avec par exemple un filtre d'aluminium), il ne peut pas être recombiné en sortie de l'interféromètre pour former une figure d'interférence permettant d'obtenir les signaux modulés. Tout faisceau possédant une longueur d'onde comparable ne peut suivre le même chemin que le faisceau UVX. Ainsi, la plupart des techniques existantes reposent sur un laser continu additionnel, de longueur d'onde spécifique, qui se propage sur un chemin décalé, le long des faisceaux principaux. Ce faisceau peut former des franges d'interférence qui sont utilisées en retour pour asservir le délai pompe-sonde.

Dans la plupart des schémas expérimentaux, le laser additionnel est guidé par un ensemble de miroirs spécifiques, afin notamment de contourner le filtre métallique.

(Vaughan 2019) propose une technique permettant une propagation coaxiale du laser additionnel et des lasers principaux (pompe et sonde) en faisant passer la partie extérieure du faisceau additionnel autour du filtre. Cependant, cette technique ne permet pas réellement de simplifier le montage optique. En effet, les deux parties du faisceau continu ne sortent pas de l'interféromètre de manière coaxiale, et doivent être réalignées dans un système optique dédié, lui-même stabilisé activement par le biais d'un second laser additionnel.

(Weber 2015) divulgue un schéma pompe-sonde en géométrie colinéaire, utilisant un faisceau annulaire pour la génération d'harmoniques et un faisceau d'habillage central. Un tel schéma présente l'avantage de ne pas utiliser de filtres IR dans l'interféromètre, puisque le faisceau de génération annulaire et l'habillage central sont recombinés avant la GHOE. Dans cette configuration, le laser additionnel peut être directement superposé aux faisceaux principaux dans l'interféromètre . Toutefois, il est toujours nécessaire de le rediriger vers le détecteur dédié à la stabilisation active, ce qui nécessite au minimum un élément optique supplémentaire.

(Schlaepfer 2019) divulgue une technique différente utilisant un oscillateur paramétrique optique (OPA) situé dans l'un des bras de l'interféromètre, ce qui empêche l'utilisation d'un laser additionnel. Conformément à cette technique, la partie extérieure du faisceau laser de génération, passant autour du filtre métallique circulaire, est recombinée avec le rayonnement harmonique. L'interférence de ce faisceau avec la lumière de l'OPA, permet la stabilisation active du retard pompe-sonde. Cette technique nécessite une stabilisation enveloppe-porteuse (CEP) des impulsions de pompe et de sonde.

Toutes ces techniques de stabilisation active de l'interféromètre requièrent au moins un élément optique spécifique, souvent bien plus. En plus de compliquer le montage, ces éléments optiques ont une influence sur l'estimation du retard pompe-sonde, qui peut donc différer de la véritable valeur, et fluctuer différemment. Par exemple, lorsqu'un laser additionnel est guidé sur des optiques spécifiques, les fluctuations de phases mesurées ne comprennent pas celles causées par la dilatation thermique des miroirs principaux.

L'invention vise à surmonter en tout ou en partie les inconvénients précités de l'art antérieur. Plus particulièrement, elle vise à permettre une estimation plus précise du retard pompe-sonde et/ou à éviter la nécessité de complexifier le montage optique pour aboutir à une telle estimation. Plus particulièrement encore, elle vise à permettre une mesure du retard pompe-sonde sans devoir utiliser un faisceau laser additionnel et/ou d'un montage de contournement d'un filtre métallique.

Conformément à l'invention un tel but est atteint en exploitant, pour la génération des signaux modulés à partir desquels est estimé le retard, la mesure du spectre de photoélectrons issus de l'ionisation d'une cible - typiquement un jet de gaz - par l'effet combiné des impulsions de pompe et de sonde (« ionisation habillée »). En d'autres termes, l'on exploite les interférences entre paquets de photoélectrons, et non entre photons comme dans le cas des techniques connues de l'art antérieur.

Un objet de l'invention permettant d'atteindre ce but est un procédé de contrôle d'un retard $\tau$ entre une première impulsion lumineuse, dite de pompe, et une deuxième impulsion lumineuse, dite de sonde, l'impulsion de pompe, mais pas l'impulsion de sonde, présentant une intensité et/ou une longueur d'onde adaptée pour ioniser une cible, l'impulsion de pompe et l'impulsion de sonde étant générées à partir d'un faisceau lumineux unique au moyen d'un interféromètre, le procédé comprenant les étapes suivantes :

> a) diriger l'impulsion de pompe et l'impulsion de sonde sur la cible, en assurant un recouvrement temporel et spatial au moins partiel de ces impulsions ;
> b) acquérir un spectre de photoélectrons issus de la cible illuminée par les deux impulsions ;
> c) estimer le retard à partir de la forme du spectre acquis ;
> les étapes a), b) et c) étant répétées pour une succession d'impulsions de pompe et de sonde, générant une suite temporelle d'estimations de retard, et
> d) effectuer une stabilisation active de l'interféromètre à partir de ladite suite temporelle d'estimations de retard.

Selon des modes de réalisation particuliers d'un tel procédé :

Les étapes a) et b) peuvent être répétées une pluralité de fois pour chaque mise en oeuvre de l'étape c), l'étape c) comprenant l'estimation d'un retard moyen à partir d'un spectre de photoélectrons accumulé.

L'impulsion de pompe peut être un train d'impulsions UVX attosecondes, ou une impulsion attosecondes unique, obtenue par génération d'harmoniques d'ordre élevé. Plus particulièrement, l'impulsion de pompe peut être un train d'impulsions UVX attosecondes obtenu par génération d'harmoniques d'ordre élevé à partir d'une impulsion lumineuse génératrice à la même longueur d'onde que l'impulsion de sonde, l'étape c) comprenant alors la détermination du retard à partir de l'intensité relative d'au moins une paire de pics du spectre de photoélectrons. Plus particulièrement encore, les pics de la paire de pics du spectre de photoélectrons peuvent être soit des pics principaux correspondant à des pics du spectre du train d'harmoniques d'ordres élevés de l'impulsion de pompe dont les phases spectrales diffèrent de $\pi/2 \pm \pi/10$, soit des pics satellites adjacents à de tels pics principaux. En variante, l'impulsion de pompe peut être une impulsion attosecondes unique obtenue par génération d'harmoniques d'ordre élevé à partir d'une impulsion lumineuse génératrice à la même longueur d'onde que l'impulsion de sonde, l'étape c) comprenant la détermination du retard à partir de l'intensité relative d'au moins deux régions du spectre de photoélectrons dont les phases spectrales diffèrent de $\pi/2 \pm \pi/10$. Selon une autre variante, l'impulsion de pompe peut être adaptée pour induire une ionisation au-dessus du seuil de la cible, l'étape c) comprenant alors la détermination du retard à partir de l'intensité relative d'au moins une paire de pics du spectre de photoélectrons.

La cible peut notamment être un jet de gaz.

Un autre objet de l'invention est un appareil pour la mise en oeuvre d'un tel procédé comprenant :

- un interféromètre configuré pour générer, à partir d'un faisceau lumineux unique, une première impulsion lumineuse, dite de pompe, et une deuxième impulsion lumineuse, dite de sonde ;
- une chambre à vide d'interaction entre une cible et des impulsions lumineuses ;
- un système optique pour diriger sur la cible l'impulsion de pompe et l'impulsion de sonde tout en assurant un recouvrement temporel et spatial au moins partiel de ces impulsions ;
- un spectromètre électronique, pour acquérir un spectre de photoélectrons émis par la cible suite à la dite interaction;
- un processeur configuré ou programmé pour estimer un retard entre l'impulsion de pompe et l'impulsion de sonde par analyse de la forme dudit spectre de photoélectrons ;
- un actionneur configuré pour modifier la longueur optique d'un bras dudit interféromètre ; et
- un contrôleur configuré pour recevoir en entrée une suite temporelle de retards estimés par le processeur et pour générer un signal de commande de l'actionneur en fonction de ladite suite temporelle de manière à réaliser une stabilisation active de l'interféromètre..

D'autres caractéristiques, détails et avantages de l'invention ressortiront à la lecture de la description faite en référence aux figures annexées donnés à titre d'exemple dans lesquelles :

[Fig.1A]

[Fig. 1B], déjà décrites, représentent schématiquement un train d'impulsions attosecondes et le spectre d'harmoniques d'ordre élevé correspondant ;

[Fig. 2A]

[Fig. 2B], déjà décrites, représentant schématiquement une impulsion attoseconde isolée et le spectre UVX continu correspondant.

[Fig. 3], déjà décrite, représente schématiquement un spectre d'ATI ;

[Fig. 4] est un schéma d'un interféromètre équipé d'un appareil de stabilisation selon un mode de réalisation de l'invention ;

[Fig. 5] illustre les transitions à deux photons impliquées dans les phénomènes d'ionisation habillée à la base de l'invention ;

[Fig. 6A]

[Fig. 6B]

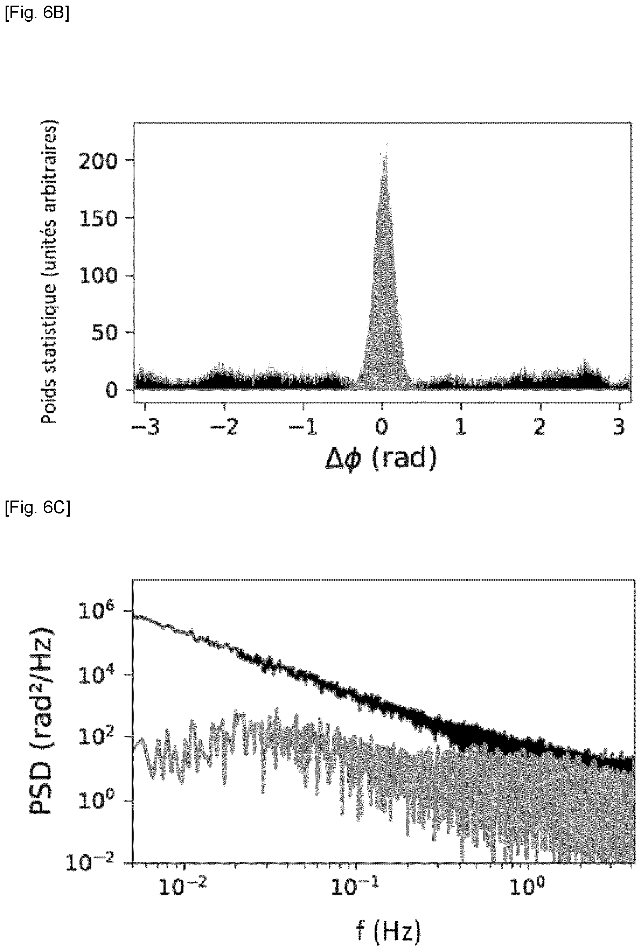

[Fig. 6C] sont des graphiques illustrant l'effet technique de l'invention.

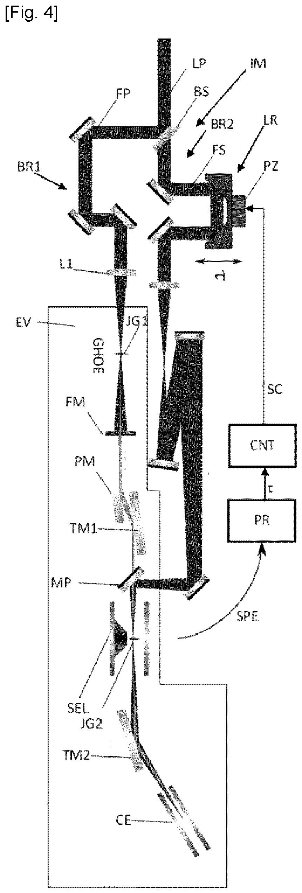

La [Fig. 4] illustre un montage, comprenant un interféromètre, permettant la génération d'une impulsion ou train d'impulsion attosecondes et d'une impulsion infrarouge d'habillage présentant un retard variable, la mesure de ce retard conformément à l'invention et l'utilisation de telles mesures de retard pour stabiliser l'interféromètre et asservissant le retard à une valeur de consigne.

Un faisceau laser primaire FLP, issu d'une chaîne laser, est fourni en entrée au montage de la [Fig. 4]. A titre d'exemple non limitatif il peut s'agir d'un faisceau constitué d'un train d'impulsions d'une durée (pleine largeur à mi-hauteur) de 25fs, une longueur d'onde de 800 nm, une énergie de 2 mJ et une cadence de 10 kHz, généré par un laser Ti:Sapphire amplifié. Un séparateur de faisceau BS sépare le faisceau primaire en un faisceau de pompe FP et un faisceau de sonde, ou habillage, FS. Le faisceau de pompe est typiquement plus intense que le faisceau de sonde, par exemple l'intensité du faisceau primaire peut être répartie à 80% pour le faisceau de pompe et à 20% pour le faisceau de sonde. Le faisceau de pompe est dirigé dans un premier bras BR1 d'un interféromètre IM, de longueur optique fixe ; le faisceau de sonde est dirigé dans un second bras BR2 de l'interféromètre présentant une ligne de retard LR ajustable, par exemple au moyen d'un actionneur piézoélectrique PZ. Le bras BR2 présente ainsi une longueur optique supérieure de $c_\tau$ à celle du bras BR1, où c est la vitesse de la lumière et $\tau$ le retard variable des impulsions de sonde par rapport aux impulsions de pompe. Pour que le procédé de l'invention puisse fonctionner correctement, il est nécessaire que le retard $\tau$ soit à l'échelle des femtosecondes, et plus précisément qu'il soit suffisamment bref (typiquement plus bref que la durée des impulsions d'entrée) pour permettre un recouvrement temporel entre les impulsions d'entrée.

Une lentille (ou miroir concave) L1 focalise le faisceau de pompe à l'intérieur d'une enceinte à vide EV et sur un premier jet de gaz JG1 - typiquement argon ou néon - où se produit la génération d'harmoniques d'ordre élevé GHOE. Le rayonnement harmonique dans la régions spectrale UVX traverse ensuite un filtre métallique FM, par exemple en aluminium, qui supprime le rayonnement à la longueur fondamentale, est réfléchi par un miroir métallique (or) planaire PM en incidence rasante et focalisé par un premier miroir torique TM1, également métallique (or) et opérant en incidence rasante. Ce rayonnement se présente sous la forme d'une succession - à la cadence de 10 kHz - d'impulsions UVX de durée 10 - 20 fs. Chacune de ces impulsions est à son tour constituée d'un train d'impulsions attosecondes.

Dans des variantes, le jet de gaz JG1 pourrait être remplacé par une lame solide mince (GHOE dans les solides), voire par une surface solide émettant du rayonnement harmonique en réflexion (GHOE par une surface solide). La GHOE par des solides est connue par exemple de (Ghimire 2019).

Un miroir percé MP permet de recombiner les impulsions UVX « de pompe » avec les impulsions infrarouge « de sonde » ou « d'habillage » provenant du bras BR2 de l'interféromètre (le rayonnement UVX traverse le perçage central tandis que le rayonnement infrarouge est réfléchi par la partie périphérique du miroir). Les deux faisceaux sont dirigés, et de préférence focalisés (le faisceau de pompe, par le miroir TM1 ; le faisceau sonde, par un miroir concave MF contenu dans le bras BR2 de l'interféromètre), sur un second jet de gaz JG2 situé dans une chambre à vide d'interaction CI couplée à un spectromètre électronique SEL, typiquement un spectromètre à temps de vol, par exemple du type à bouteille magnétique. La faible valeur du retard $\tau$ assure un recouvrement temporel au moins partiel entre l'impulsion de sonde et celle de pompe, tandis que le montage optique assure leur recouvrement spatial au sein du jet JG2. Le spectromètre électronique SEL permet de mesurer le spectre d'énergie des photoélectrons issus de la « photoionisation habillée » des atomes (ou molécules) du gaz du jet JG2. La cible JG2 destinée à être ionisée ne doit pas nécessairement être un jet de gaz ; en variante il pourrait s'agir, par exemple, d'une surface solide.

Ensuite, les deux faisceaux sont refocalisés par un second miroir torique métallique (or) TM2 dans une chambre d'expérience CE, où une expérience de attoscience peut être conduite. D'une manière connue en soi, la propagation du rayonnement UVX s'effectue entièrement dans le vide. Dans le mode de réalisation de la [Fig. 4], le jet de gaz de génération JG1, les optiques de focalisation du rayonnement UVX, la chambre d'interaction CI, le spectromètre électronique SEL et la chambre d'expérience CE font partie d'une même enceinte à ultra-vide.

En variante, les faisceaux peuvent traverser d'abord la chambre d'expérience CE, puis la chambre d'interaction CI. L'avantage de cette configuration est qu'un appareil de mesure du retard peut être ajouté à un montage expérimental préexistant.

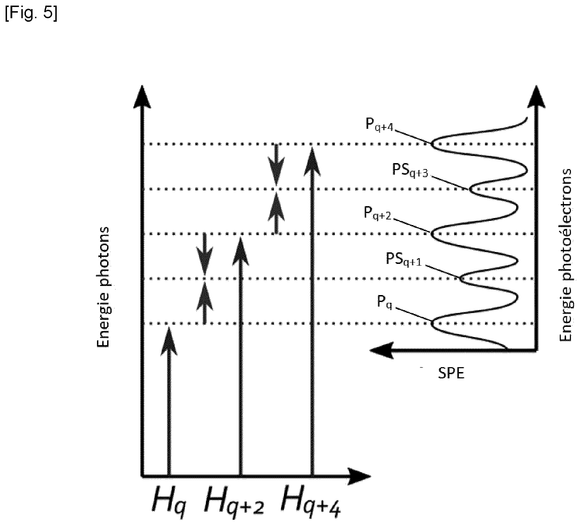

Un processeur PR - typiquement un ordinateur programmé de manière opportune, ou bien un circuit numérique dédié - analyse le spectre de photoélectrons et en déduit une estimation du retard $\tau$, comme cela sera expliqué en détail plus loin à l'aide de la [Fig. 5]. Un contrôleur CNT analogique ou numérique (qui peut d'ailleurs coïncider avec le processeur PR) reçoit en entrée l'estimation de $\tau$ et génère à sa sortie un signal de commande SC de l'actionneur piézoélectrique de manière à asservir $\tau$ à une valeur de consigne prédéfinie. Le fonctionnement du contrôleur est connu en soi ; il peut s'agir par exemple d'un contrôleur PID.

Le montage de la [Fig. 4] diffère d'une « ligne attoseconde » conventionnelle par la présence du second jet de gaz JG2, du spectromètre électronique SEL et du processeur PR programmé ou configuré pour estimer la valeur du retard $\tau$ à partir d'une analyse du spectre de photoélectrons, et par le fait que le contrôleur CNT reçoit son signal d'entrée de ce processeur. L'invention peut également s'appliquer à des montages différents, du moment qu'ils permettent de générer une impulsion de pompe et une impulsion de sonde spatialement superposées, présentant un décalage temporel à l'échelle des femtosecondes et permettant de réaliser l'ionisation habillée d'une cible. La cible ne doit pas nécessairement être un gaz, il pourrait également s'agir, par exemple, d'une surface solide. Voir par exemple, (Locher 2015).

Le spectre SPE des photoélectrons issus du gaz du jet JG2 est constitué de pics $P_q$, $P_{q+2}$, $P_{q+4}$ correspondant aux énergies des photons des harmoniques $H_q$, $H_{q+2}$, $H_{q+4}$... moins l'énergie d'ionisation $E_I$, où q est un entier impair tel que $q\hbar\omega_L$ est supérieure à $E_I$ ($\omega_L$ étant la fréquence angulaire centrale de la fondamentale). La présence simultanée de l'impulsion de sonde, à la fréquence $\omega_L$, rend possible des transitions à deux photons qui provoquent l'apparition, dans le spectre de photoélectrons, de pics satellites $PS_{q+1}$, $PS_{q+3}$... situés entre les pics principaux. Deux transitions contribuent à un même pic satellite. Par exemple, des électrons d'énergie $(q + 1)\hbar\omega_L$ (appartenant donc au pic satellite $PS_{q+1}$) peuvent être obtenus par absorption simultanée d'un photon de l'harmonique $H_q$, d'énergie $q\hbar\omega_L$, et d'un photon de la fondamentale, d'énergie $\hbar\omega_L$ ; mais également par absorption d'un photon de l'harmonique $H_{q+2}$ d'énergie $(q + 2)\hbar\omega_L$ et émission stimulée d'un photon d'énergie $\hbar\omega_L$. Ces deux chemins quantiques interfèrent, ce qui conduit à une modulation de l'intensité des pics satellites (c'est-à-dire du nombre de photoélectrons détectés dont l'énergie correspond à celle du pic satellite) avec le retard $\tau$. Ce principe est également à la base d'une technique dite « RABBIT », décrite pour la première fois dans (Paul 2001) et utilisée pour mesurer les variations de phase spectrale d'un train d'impulsions attosecondes.

La dépendance de l'intensité d'un pic satellite $PS_{q+1}$ du retard $\tau$ est donnée par

Equation (4)

$$I_{q+1}(\tau) = O_{q+1} + A_{q+1}sin\big(2\omega_L\tau + \phi_{at} + \phi_q - \phi_{q+2}\big)$$

Où $I_{q+1}$ est l'intensité du pic satellite $PS_{q+1}$ d'énergie $(q + 1)\hbar\omega_L$ (q étant ici un entier impair), $O_{q+1}$ l'intensité de ce pic en l'absence d'habillage par l'impulsion de sonde (en principe, $O_{q+1}=0$), $A_{q+1}$ l'intensité maximal du pic, qui dépend de l'intensité des harmoniques $H_q$ et $H_{q+2}$ et de l'impulsion de sonde, $\phi_{at}$ une phase atomique intrinsèque, qui peut généralement être considérée constante et donc négligée, et $\phi_q$, $\phi_{q+2}$ les phases spectrales des harmoniques $H_q$ et $H_{q+2}$. On remarque que $I_{q+1}$ est une fonction sinusoïdale de $\tau$ et oscille à une fréquence angulaire $2\omega_L$ ; en d'autres termes l'équation (4) a la même forme que l'équation (1).

Une fois les différents paramètres de l'équation (4) estimés par étalonnage, une mesure de $I_{q+1}$ permet d'estimer $\tau$.

(Marojou 2020) et (Krüger 2020) ont montré qu'une mesure de l'intensité relative de deux pics satellites d'un spectre de photoionisation habillée permet de déterminer la phase spectrale (Marojou 2020) ou la phase atomique (Krüger 2020) d'une impulsion UVX en s'affranchissant des effets délétères des variations aléatoires du retard $\tau$. L'approche de l'invention est tout à fait différente : il ne s'agit pas de neutraliser a posteriori l'effet de ces fluctuations, mais de les supprimer au moyen d'un système d'asservissement.

Des pics satellites d'ordres différents ne sont pas en phase entre eux à cause du terme $\phi_q$-$\phi_{q+2}$. En considérant au moins deux pics satellites - préférentiellement suffisamment espacés - il est donc possible d'obtenir deux fonctions modulées en fonction du retard et déphasées entre elles, comme requis par (Krishnamachari 2006). Plus particulièrement on sait que, d'une manière générale, la phase spectrale des harmoniques obtenues par GHOE varie d'environ $\pi$ entre

la limite basse du plateau et la coupure. Il est donc toujours possible d'obtenir deux signaux approximativement en quadrature (avec une tolérance, par exemple, de plus ou moins $\pi/10$ radians), ce qui est optimal pour la stabilisation de l'interféromètre.

Il convient de noter que l'intensité des pics principaux du spectre de photoélectrons varie aussi de manière sinusoïdale avec le retard $\tau$. Il est donc possible d'utiliser une mesure d'intensité d'un ou plusieurs pics principaux pour estimer $\tau$ et/ou stabiliser l'interféromètre.

Dans le cas où l'impulsion de pompe est une impulsion attosecondes isolée, le spectre de photoélectrons est continu et il n'est pas possible d'identifier des pics discrets, soient-ils principaux ou satellites. Cependant, les transitions à deux photons et les interférences entre chemins quantiques se produisent même dans ces conditions. Il est donc toujours possible d'identifier des régions du spectre qui oscillent en fonction du retard $\tau$, et notamment de trouver deux telles régions qui oscillent en quadrature de phase.

Il est également possible de considérer plus que deux pics (ou bandes spectrales) du spectre de photoélectrons. A la limite, il est possible de considérer le spectre entier, de telle sorte que le retard $\tau$ est déduit d'une optimisation de l'intensité spectrale, par exemple par la méthode des moindres carrés. Dans ce cas, en phase d'étalonnage plusieurs spectres de photoélectrons sont acquis en correspondance de valeur respectives du retard ; puis, en phase d'utilisation, on cherche le spectre d'étalonnage le plus proche - au sens des moindres carrés - du spectre acquis pour un retard inconnu à mesurer.

L'invention a été testée en utilisant le montage décrit plus haut en référence à la [Fig. 4]. Chaque spectre de photoélectrons a été obtenu par accumulation sur 1000 impulsions ; les mesures de retard ont donc été effectuées avec une cadence de 10 Hz, ce qui est suffisant pour compenser les dérives thermiques. Une cadence d'acquisition des spectres plus élevée serait possible et permettrait, par exemple, de compenser les vibrations dues aux pompes turbomoléculaires qui maintiennent le vide à l'intérieur de l'enceinte EV, mais au prix d'une dégradation de l'écart signal à bruit, et donc d'une augmentation de l'erreur d'estimation du retard.

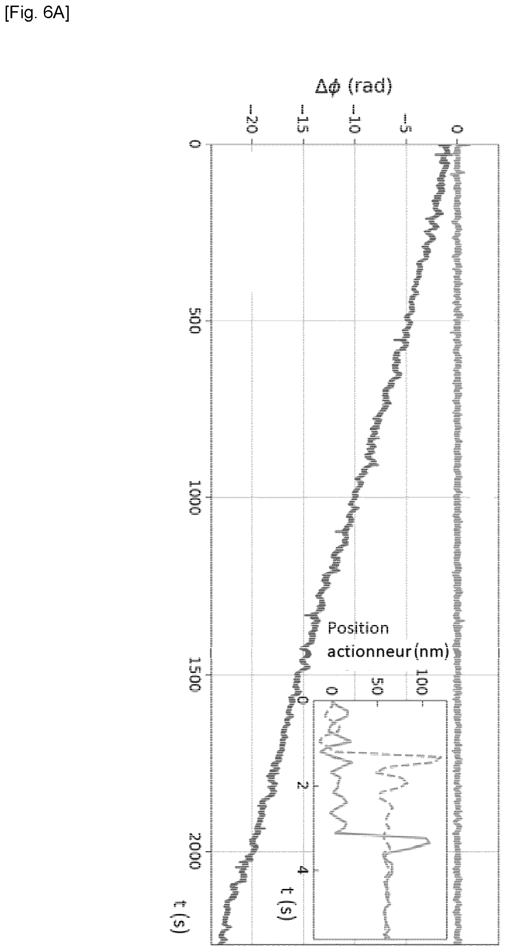

La [Fig. 6A] illustre l'évolution, en fonction du temps « t », de l'erreur de phase $\Delta\phi = \phi(t) - \phi_0$ où $\phi(t)$ est la phase de l'oscillation sinusoïdale de l'équation (4) et $\phi_0$ une consigne, avec une stabilisation active selon l'invention (trait clair) et sans une telle stabilisation (trait foncé). Sans stabilisation, l'on observe une dérive approximativement linéaire à un taux d'environ 36 rad/h (c'est-à-dire 7,6 fs/h), vraisemblablement due à des effets thermiques, tandis que la stabilisation active - obtenue en utilisant les pics satellites d'ordre 14 et 22 du spectre de photoélectrons - élimine complètement cette dérive et ne laisse subsister que des fluctuations d'amplitude moyenne quadratique (rms) d'environ 134 mrad, c'est-à-dire 28 as, ce qui est au niveau de l'état de l'art (mais avec moins d'incertitude, car il n'est pas nécessaire d'utiliser un faisceau laser additionnel comme dans l'art antérieur). La [Fig. 6B] montre un histogramme de l'erreur de phase et la [Fig. 6C] un graphique de sa densité spectrale de puissance PSD (clair : sans stabilisation active ; foncé : avec stabilisation active) en fonction de la fréquence f. La [Fig. 6C], en particulier, montre que le bruit à basse fréquence, correspondant à la dérive d'origine thermique, est supprimé efficacement par la stabilisation active selon l'invention.

L'insert de la [Fig. 6A] montre l'évolution de la position de l'actionneur piézoélectrique quand sa valeur de consigne change de 100 nm. La courbe hachée correspond à un contrôleur CNT de type PID non optimisé, la courbe continue à un contrôleur PID optimisé. Dans ce dernier cas, la nouvelle position est atteinte en environ 0,5 s, ce qui est compatible avec un balayage du retard, généralement requis par les expériences d'attoscience.

L'invention a été décrite en référence à un mode de réalisation dans lequel l'impulsion de pompe est une impulsion dans l'ultraviolet extrême (UVX) ou dans la région des rayons X mous obtenue par GHOE dans un gaz, mais cela n'est pas essentiel : il suffit que l'impulsion de pompe (mais pas celle de sonde) permette d'ioniser une cible. L'impulsion de pompe pourrait être une impulsion UVX générée par un effet physique différent de la génération d'harmoniques d'ordre élevé (par exemple, générée par un laser à électrons libres), ou bien être une impulsion dans le proche infrarouge ou le visible présentant une intensité suffisamment élevée pour ioniser la cible par ATI. Dans ce dernier cas, le spectre de photoélectrons présentera des pics plus rapprochés, dont les énergies correspondent aux harmoniques paires et impaires de l'impulsion fondamentale, mais cela ne modifie pas de manière significative le principe de la mesure. Ce mode de réalisation peut être utilisé, par exemple, pour stabiliser le retard dans une expérience de pompe-sonde utilisant une impulsion de pompe dans l'infrarouge (typiquement 800 nm) et une impulsion de sonde correspondant à sa seconde harmonique (400 nm).

Références :

(Calegari 2016) : Francesca Calegari, Giuseppe Sansone, Salvatore Stagira, Caterina Vozzi, Mauro Nisoli « Advances in attosecond science », J. Phys. B: At. Mol. Opt. Phys. 49 (2016) 062001.

(Becker 2018) : W. Becker, S. P. Goreslavski, D. B. Miloevisc, G. G. Paulus « The plateau in above-threshold ionization: the keystone of rescattering physics », J. Phys. B: At. Mol. Opt. Phys. 51 (2018) 162002.

(Krishnamachari 2006) : Vishnu Vardhan Krishnamachari, Esben Ravn Andresen, Soren Rud Keiding, Eric Olaf Potma, « An active interferometer-stabilization scheme with linear phase control », Opt. Express 14, 5210-5215 (2006).

(Vaughan 2019): John Vaughan, Joseph Bahder, Brady Unzicker, Davis Arthur, Morgan Tatum, Trevor Hart, Geoffroy Harrison, Spenser Burrows, Patrick Stringer, Guillaume M. Laurent, « Design of an optically-locked interferometer for attosecond pump-probe setups », Opt. Express 27, 30989-31000 (2019).

(Weber 2015) : S. J. Weber, B. Manschwetus, M. Billon, M. Böttcher, M. Bougeard, P. Breger, M. Géléoc, V. Gruson, A. Huetz, N. Lin, Y. J. Picard, T. Ruchon, P. Salières, B. Carré, « Flexible attosecond beamline for high harmonic spectroscopy and xuv/near-ir pump probe experiments requiring long acquisition times », Review of Scientific Instruments 86, 033108 (2015).

(Schlaepfer 2019) F. Schlaepfer, M. Volkov, N. Hartmann, A. Niedermayr, Z. Schumacher, L. Gallmann, U. Keller, « Phase stabilization of an attosecond beamline combining two IR colors », Opt. Express 27, 22385-22392 (2019).

(Paul 2001) P. M. Paul, E. S. Toma, P. Breger, G. Mullot, F. Augé, P. Balcou, H. G.Muller, P. Agostini, « Observation of a train of attosecond pulses from high harmonic génération », Science 292, 1689-1692 (2001).

(Ghimire 2019) Shambhu Ghimire, David A. Reis. « High-harmonic génération from solids », Nature Physics 15.1 (2019): 10-16.

(Locher 2015): Reto Locher, Luca Castiglioni, Matteo Lucchini, Michael Greif, Lukas Gallmann, Jürg Osterwalder, Matthias Hengsberger, Ursula Keller « Energy-dependent photoemission delays from noble metal surfaces by attoseconde interferometry », Optica, Vol. 2, No. 9, Mai 2015.

(Marojou 2020) : Praveen Kumar Marojou et al. « Attosecond pulse shaping using a seeded free-electron laser », Nature, Vol. 578, 20 février 2020.

(Krüger 2020): Constantin Krüger, Jaco Fuchs, Laura Cattaneo, Ursula Keller « Attosecond resolution from free running interferometric measurements », Optics Express, Vol. 28, No. 9, 27 avril 2020.

## Revendications

1. Procédé de contrôle d'un retard ($\tau$) entre une première impulsion lumineuse, dite de pompe, et une deuxième impulsion lumineuse, dite de sonde, l'impulsion de pompe, mais pas l'impulsion de sonde, présentant une intensité et/ou une longueur d'onde adaptée pour ioniser une cible (JG2), l'impulsion de pompe et l'impulsion de sonde étant générées à partir d'un faisceau lumineux unique au moyen d'un interféromètre (IM), le procédé comprenant les étapes suivantes :

   a) diriger l'impulsion de pompe et l'impulsion de sonde sur la cible, en assurant un recouvrement temporel et spatial au moins partiel de ces impulsions ;
   b) acquérir un spectre de photoélectrons (SPE) issus de la cible illuminée par les deux impulsions ;
   c) estimer le retard à partir de la forme du spectre acquis ;
   les étapes a), b) et c) étant répétées pour une succession d'impulsions de pompe et de sonde, générant une suite temporelle d'estimations de retard, et
   d) effectuer une stabilisation active de l'interféromètre à partir de ladite suite temporelle d'estimations de retard.

2. Procédé selon la revendication 1 dans lequel les étapes a) et b) sont répétées une pluralité de fois pour chaque mise en oeuvre de l'étape c), et dans lequel l'étape c) comprend l'estimation d'un retard moyen à partir d'un spectre de photoélectrons accumulé.

3. Procédé selon l'une des revendications précédentes dans lequel l'impulsion de pompe est un train d'impulsions UVX attosecondes, ou une impulsion attosecondes unique, obtenu par génération d'harmoniques d'ordre élevé (GHOE).

**4.** Procédé selon la revendication 3 dans lequel l'impulsion de pompe est un train d'impulsions UVX attosecondes obtenu par génération d'harmoniques d'ordre élevé à partir d'une impulsion lumineuse génératrice à la même longueur d'onde que l'impulsion de sonde, l'étape c) comprenant la détermination du retard à partir de l'intensité relative d'au moins une paire de pics ($P_q$, $P_{q+2}$, $P_{q+4}$, $PS_{q+1}$, $PS_{q+3}$) du spectre de photoélectrons.

**5.** Procédé selon la revendication 4 dans lequel les pics de la paire de pics du spectre de photoélectrons sont soit des pics principaux ($P_q$, $P_{q+2}$) correspondant à des pics ($H_q$, $H_{q+2}$) du spectre du train d'harmoniques d'ordres élevés de l'impulsion de pompe dont les phases spectrales diffèrent de $\pi/2 \pm \pi/10$, soit des pics satellites ($PS_{q+1}$, $PS_{q+3}$) adjacents à de tels pics principaux.

**6.** Procédé selon la revendication 3 dans lequel l'impulsion de pompe est une impulsion attosecondes unique obtenue par génération d'harmoniques d'ordre élevé à partir d'une impulsion lumineuse génératrice à la même longueur d'onde que l'impulsion de sonde, l'étape c) comprenant la détermination du retard à partir de l'intensité relative d'au moins deux régions du spectre de photoélectrons dont les phases spectrales diffèrent de $\pi/2 \pm \pi/10$.

**7.** Procédé selon l'une des revendications 1 ou 2 dans lequel l'impulsion de pompe est adaptée pour induire une ionisation au-dessus du seuil de la cible, l'étape c) comprenant la détermination du retard à partir de l'intensité relative d'au moins une paire de pics du spectre de photoélectrons.

**8.** Procédé selon l'une des revendications précédentes dans lequel la cible (JG2) est un jet de gaz.

**9.** Appareil pour la mise en oeuvre d'un procédé selon l'une des revendications précédentes comprenant :

- un interféromètre (IM) configuré pour générer, à partir d'un faisceau lumineux unique (LP), une première impulsion lumineuse, dite de pompe, et une deuxième impulsion lumineuse, dite de sonde ;
- une chambre à vide d'interaction (CI) entre une cible (JG2) et des impulsions lumineuses ;
- un système optique (BR1, PM, TM1, BR2, MP) pour diriger sur la cible l'impulsion de pompe et l'impulsion de sonde tout en assurant un recouvrement temporel et spatial au moins partiel de ces impulsions ;
- un spectromètre électronique (SEL), pour acquérir un spectre de photoélectrons (SPE) émis par la cible suite à la dite interaction;
- un processeur (PR) configuré ou programmé pour estimer un retard entre l'impulsion de pompe et l'impulsion de sonde par analyse de la forme dudit spectre de photoélectrons ;
- un actionneur (PZ) configuré pour modifier la longueur optique d'un bras (BR2) dudit interféromètre ; et
- un contrôleur (CNT) configuré pour recevoir en entrée une suite temporelle de retards estimés par le processeur et pour générer un signal de commande (SC) de l'actionneur en fonction de ladite suite temporelle de manière à réaliser une stabilisation active de l'interféromètre.

**Patentansprüche**

**1.** Verfahren zum Steuern einer Verzögerung ($\tau$) zwischen einem ersten Lichtimpuls, Pumpimpuls genannt, und einem zweiten Lichtimpuls, Sondenimpuls genannt, wobei der Pumpimpuls, aber nicht der Sondenimpuls, eine Intensität und/oder eine Wellenlänge hat, die zum Ionisieren eines Targets (JG2) ausgelegt ist, wobei der Pumpimpuls und der Sondenimpuls aus einem einzigen Lichtstrahl mit Hilfe eines Interferometers (IM) erzeugt werden, wobei das Verfahren die folgenden Schritte umfasst:

a) Richten des Pumpimpulses und des Sondenimpulses auf das Target unter Gewährleistung einer mindestens teilweisen zeitlichen und räumlichen Überlappung dieser Impulse;
b) Erfassen eines Spektrums von Photoelektronen (SPE), die von dem von den beiden Impulsen beleuchteten Target ausgehen;
c) Schätzen der Verzögerung auf der Basis der Form des erfassten Spektrums;
wobei die Schritte a), b) und c) für eine Folge von Pump- und Sondenimpulsen wiederholt werden, wodurch eine zeitliche Folge von Verzögerungsschätzungen erzeugt wird, und
d) Durchführen einer aktiven Stabilisierung des Interferometers auf der Basis der zeitlichen Folge von Verzögerungsschätzungen.

**2.** Verfahren nach Anspruch 1, wobei die Schritte a) und b) für jede Durchführung von Schritt c) eine Vielzahl von Malen wiederholt werden, und wobei Schritt c) das Schätzen einer mittleren Verzögerung auf der Basis eines akkumulierten Photoelektronenspektrums umfasst.

3.  Verfahren nach einem der vorhergehenden Ansprüche, wobei der Pumpimpuls eine Attosekunden-UVX-Impulsfolge oder ein einzelner Attosekundenimpuls ist, die/der durch Erzeugen von Harmonischen höherer Ordnung (GHOE) erhalten wird.

4.  Verfahren nach Anspruch 3, wobei der Pumpimpuls eine Attosekunden-UVX-Impulsfolge ist, die durch Erzeugen von Harmonischen höherer Ordnung aus einem erzeugenden Lichtimpuls mit der gleichen Wellenlänge wie der Sondenimpuls erhalten wird, wobei Schritt c) das Bestimmen der Verzögerung auf der Basis der relativen Intensität von mindestens einem Paar von Peaks ($P_q$, $P_{q+2}$, $P_{q+4}$, $PS_{q+1}$, $PS_{q+3}$) des Photoelektronenspektrums umfasst.

5.  Verfahren nach Anspruch 4, wobei die Peaks des Peakpaars des Photoelektronenspektrums entweder Hauptpeaks ($P_q$, $P_{q+2}$), die Peaks ($H_q$, $H_{q+2}$) des Spektrums der Folge von Harmonischen höherer Ordnung des Pumpimpulses entsprechen, deren spektrale Phasen sich um $\pi/2 \pm \pi/10$ unterscheiden, oder Satellitenpeaks ($PS_{q+1}$, $PS_{q+3}$) benachbart zu solchen Hauptpeaks sind.

6.  Verfahren nach Anspruch 3, wobei der Pumpimpuls ein einzelner Attosekundenimpuls ist, der durch Erzeugen von Harmonischen höherer Ordnung aus einem erzeugenden Lichtimpuls mit der gleichen Wellenlänge wie der Sondenimpuls erhalten wird, wobei Schritt c) das Bestimmen der Verzögerung auf der Basis der relativen Intensität von mindestens zwei Regionen des Photoelektronenspektrums umfasst, deren spektrale Phasen sich um $\pi/2 \pm \pi/10$ unterscheiden.

7.  Verfahren nach Anspruch 1 oder 2, wobei der Pumpimpuls zum Induzieren einer Ionisation oberhalb des Schwellenwerts des Targets ausgelegt ist, wobei Schritt c) das Bestimmen der Verzögerung auf der Basis der relativen Intensität von mindestens einem Paar von Peaks des Photoelektronenspektrums umfasst.

8.  Verfahren nach einem der vorhergehenden Ansprüche, wobei das Target (JG2) ein Gasstrahl ist.

9.  Vorrichtung zur Durchführung eines Verfahrens nach einem der vorhergehenden Ansprüche, die Folgendes umfasst:

    - ein Interferometer (IM), konfiguriert zum Erzeugen, aus einem einzigen Lichtstrahl (LP), eines ersten Lichtimpulses, des sogenannten Pumpimpulses, und eines zweiten Lichtimpulses, des sogenannten Sondenimpulses;
    - eine Vakuumkammer (CI) zur Wechselwirkung zwischen einem Target (JG2) und den Lichtimpulsen;
    - ein optisches System (BR1, PM, TM1, BR2, MP) zum Richten des Pumpimpulses und des Sondenimpulses auf das Target unter Gewährleistung einer mindestens teilweisen zeitlichen und räumlichen Überlappung dieser Impulse;
    - ein Elektronenspektrometer (SEL) zum Erfassen eines Spektrums von Photoelektronen (SPE), die infolge der Wechselwirkung von dem Target emittiert werden;
    - einen Prozessor (PR), der zum Schätzen einer Verzögerung zwischen dem Pumpimpuls und dem Sondenimpuls durch Analysieren der Form des Photoelektronenspektrums konfiguriert oder programmiert ist;
    - einen Aktuator (PZ), der zum Verändern der optischen Länge eines Arms (BR2) des Interferometers konfiguriert ist; und
    - eine Steuerung (CNT), die zum Empfangen einer zeitlichen Folge von vom Prozessor geschätzten Verzögerungen am Eingang und zum Erzeugen eines Steuersignals (SC) für den Aktuator in Abhängigkeit von der zeitlichen Folge konfiguriert ist, um eine aktive Stabilisierung des Interferometers durchzuführen.

**Claims**

1.  A method for controlling a delay ($\tau$) between a first light pulse, called pump pulse, and a second light pulse, called probe pulse, with the pump pulse, but not the probe pulse, having an intensity and/or a wavelength adapted to ionise a target (JG2), the pump pulse and the probe pulse being generated from a single light beam by means of an interferometer (IM), the method comprising the following steps:

    a) directing the pump pulse and the probe pulse onto the target, while providing at least partial temporal and spatial overlapping of these pulses;
    b) acquiring a photoelectron spectrum (SPE) derived from the target illuminated by the two pulses;
    c) estimating the delay from the shape of the acquired spectrum;

with steps a), b) and c) being repeated for a succession of pump and probe pulses, thereby generating a temporal sequence of delay estimates; and

d) actively stabilising the interferometer from said temporal sequence of delay estimates.

2. The method according to claim 1, wherein steps a) and b) are repeated a plurality of times for each implementation of step c), and wherein step c) comprises estimating an average delay from an accumulated photoelectron spectrum.

3. The method according to any of the preceding claims, wherein the pump pulse is a train of UVX attosecond pulses, or a single attosecond pulse, obtained by generating high-order harmonics (GHOE).

4. The method according to claim 3, wherein the pump pulse is a train of UVX attosecond pulses obtained by generating high-order harmonics from a generating light pulse at the same wavelength as the probe pulse, with step c) comprising determining the delay from the relative intensity of at least one pair of peaks ($P_q$, $P_{q+2}$, $P_{q+4}$, $PS_{q+1}$, $PS_{q+3}$) of the photoelectron spectrum.

5. The method according to claim 4, wherein the peaks of the pair of peaks of the photoelectron spectrum are either main peaks ($P_q$, $P_{q+2}$) corresponding to peaks ($H_q$, $H_{q+2}$) of the spectrum of the train of high-order harmonics of the pump pulse whose spectral phases differ by $\pi/2 \pm \pi/10$, or to satellite peaks ($PS_{q+1}$, $PS_{q+3}$) adjacent to such main peaks.

6. The method according to claim 3, wherein the pump pulse is a single attosecond pulse obtained by generating high-order harmonics from a generating light pulse at the same wavelength as the probe pulse, with step c) comprising determining the delay from the relative intensity of at least two regions of the photoelectron spectrum whose spectral phases differ by $\pi/2 \pm \pi/10$.

7. The method according to one of claims 1 or 2, wherein the pump pulse is adapted to induce ionisation above the threshold of the target, with step c) comprising determining the delay from the relative intensity of at least one pair of peaks of the photoelectron spectrum.

8. The method according to any of the preceding claims, wherein the target (JG2) is a gas jet.

9. An appliance for implementing a method according to any of the preceding claims, comprising:

- an interferometer (IM) configured to generate a first light pulse, called pump pulse, and a second light pulse, called probe pulse, from a single light beam (LP);
- an vacuum chamber (CI) for interaction between a target (JG2) and the light pulses;
- an optical system (BR1, PM, TM1, BR2, MP) for directing the pump pulse and the probe pulse onto the target, while providing at least partial temporal and spatial overlapping of these pulses;
- an electron spectrometer (SEL), for acquiring a photoelectron spectrum (SPE) emitted by the target following said interaction;
- a processor (PR) configured or programmed to estimate a delay between the pump pulse and the probe pulse by analysing the shape of said photoelectron spectrum;
- an actuator (PZ) configured to modify the optical length of an arm (BR2) of said interferometer; and
- a controller (CNT) configured to receive as input a temporal sequence of delays estimated by the processor and to generate a control signal (SC) for the actuator as a function of said temporal sequence so as to implement active stabilisation of the interferometer.

[Fig. 1A]

Energie (eV)

[Fig. 1B]

Temps (s)

EP 4 214 482 B1

[Fig. 2A]

Phase spectrale

Intensité

Phase sepctrale

δω

Energie de photon

[Fig. 2B]

Phase temporelle

Intensité

Phase temporelle

δt

Temps

15

[Fig. 3]

[Fig. 4]

[Fig. 5]

[Fig. 6A]

[Fig. 6B]

[Fig. 6C]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FRANCESCA CALEGARI ; GIUSEPPE SANSONE ; SALVATORE STAGIRA ; CATERINA VOZZI ; MAURO NISOLI.** Advances in attosecond science. *J. Phys. B: At. Mol. Opt. Phys.,* 2016, vol. 49, 062001
- **VISHNU VARDHAN KRISHNAMACHARI ; ESBEN RAVN ANDRESEN ; SOREN RUD KEIDING ; ERIC OLAF POTMA.** An active interferometer-stabilization scheme with linear phase control. *Opt. Express,* 2006, vol. 14, 5210-5215
- **JOHN VAUGHAN ; JOSEPH BAHDER ; BRADY UNZICKER ; DAVIS ARTHUR ; MORGAN TATUM ; TREVOR HART ; GEOFFROY HARRISON ; SPENSER BURROWS ; PATRICK STRINGER ; GUILLAUME M. LAURENT.** Design of an optically-locked interferometer for attosecond pump-probe setups. *Opt. Express,* 2019, vol. 27, 30989-31000
- **S. J. WEBER ; B. MANSCHWETUS ; M. BILLON ; M. BÖTTCHER ; M. BOUGEARD ; P. BREGER ; M. GÉLÉOC ; V. GRUSON ; A. HUETZ ; N. LIN.** Flexible attosecond beamline for high harmonic spectroscopy and xuv/near-ir pump probe experiments requiring long acquisition times. *Review of Scientific Instruments,* 2015, vol. 86, 033108
- **F. SCHLAEPFER ; M. VOLKOV ; N. HARTMANN ; A. NIEDERMAYR ; Z. SCHUMACHER ; L. GALLMANN ; U. KELLER.** Phase stabilization of an attosecond beamline combining two IR colors. *Opt. Express,* 2019, vol. 27, 22385-22392
- **P. M. PAUL ; E. S. TOMA ; P. BREGER ; G. MULLOT ; F. AUGÉ ; P. BALCOU, H. G.MULLER ; P. AGOSTINI.** Observation of a train of attosecond pulses from high harmonic génération. *Science,* 2001, vol. 292, 1689-1692
- **SHAMBHU GHIMIRE ; DAVID A. REIS.** High-harmonic génération from solids. *Nature Physics,* 2019, vol. 15 (1), 10-16
- **RETO LOCHER ; LUCA CASTIGLIONI ; MATTEO LUCCHINI ; MICHAEL GREIF ; LUKAS GALLMANN ; JÜRG OSTERWALDER ; MATTHIAS HENGSBERGER ; URSULA KELLER.** Energy-dependent photoemission delays from noble metal surfaces by attoseconde interferometry. *Optica,* Mai 2015, vol. 2 (9
- **PRAVEEN KUMAR MAROJOU et al.** Attosecond pulse shaping using a seeded free-electron laser. *Nature,* 20 Février 2020, vol. 578
- **CONSTANTIN KRÜGER ; JACO FUCHS ; LAURA CATTANEO ; URSULA KELLER.** Attosecond resolution from free running interferometric measurements. *Optics Express,* 27 Avril 2020, vol. 28 (9